# EUROPÄISCHE PATENTSCHRIFT

(11) **EP 2 574 477 B1**
(45) Veröffentlichungstag und Bekanntmachung des Hinweises auf die Patenterteilung: **02.04.2014**
(21) Anmeldenummer: 12006678.2
(22) Anmeldetag: 24.09.2012
(51) Int. Cl.: B60B 5/02, B60B 3/14, B29C 70/22

(54) **Radfelge mit einer Radscheibe aus Faserverbundwerkstoff und Befestigungsmitteln**
Rim with a disk of a wheel made from fibre reinforced plastics and attachment means
Jante avec une disque de roue en composite et ses moyens de fixation

(30) Priorität: 27.09.2011 DE 102011114358
(43) Veröffentlichungstag der Anmeldung: 03.04.2013
(73) Patentinhaber: ThyssenKrupp Carbon Components GmbH, 01723 Wilsdruff STT Kesselsdorf (DE)
(72) Erfinder: Hufenbach, Werner, Prof. Dr.-Ing. habil, 01324 Dresden (DE); Lepper, Martin, Dr.-Ing., 01279 Dresden (DE); Werner, Jens, Dr.-Ing., 01640 Coswig (DE); Köhler, Christian, Dipl.-Ing., 01099 Dresden (DE)

(56) Entgegenhaltungen:
- DE-A1- 19 608 601
- DE-A1- 19 940 524
- DE-T2- 68 922 982

## Beschreibung

Die Erfindung betrifft eine Radfelge mit einer Radscheibe aus einem Faserverbundwerkstoff und mit Befestigungsmitteln zur Befestigung der Radscheibe an einer Radnabe eines Fahrzeugs, wobei die Radscheibe zumindest eine Öffnung zur Aufnahme der Radnabe aufweist und die Öffnung mit einer konischen Zentrierfläche für den Sitz eines Befestigungsmittels ausgebildet ist.

Radscheiben aus einem Faserverbundwerkstoff sind beispielsweise aus der Druckschrift DE 1939910 bekannt. Die Druckschrift offenbart ein Verfahren zur Herstellung von Laufrädern aus faserverstärkten Kunststoffen für Kraftfahrzeuge, bei dem in einem Bereich hoher Spannungen der Radscheibe bzw. Radschüssel Verstärkungsfasern entsprechend dem Verlauf der auftretenden Spannungen kreisförmig und radial zur Radachse angeordnet werden. Zur Erhöhung der Festigkeit werden in diesem Bereich zusätzliche Fasereinlagen übereinander angeordnet. Die Öffnung für die Radnabe sowie der Sitz der Radnabe oder eines Befestigungsmittels werden nicht näher beschrieben. Aus den Figuren ist ein nach außen gewölbter Randbereich der Öffnung ersichtlich, wobei die Radscheibe mit einer in Richtung der Radachse weisenden Randfläche abschließt. Es ist hiernach zu erwarten, dass die im Randbereich der Öffnung, also im Bereich der höchsten Spannungen, verlaufenden Faserlagen durch die dort eingeleiteten Belastungen vornehmlich auf Biegung beansprucht werden, was eine erhebliche Schwächung der Faserverbundstruktur in diesem Bereich nach sich zieht und einen Ausgangspunkt für eine Delamination der Faserlagen bilden kann.

Aus der Druckschrift DE 101 45 630 A1 ist eine Radscheibe bzw. eine Radstern aus Faserverbundwerkstoff bekannt, wobei die Fasern im Radstern größtenteils in radialer Richtung angeordnet sind. Zusätzlich kann der Radstern in radialer oder Umfangsrichtung orientierte Gewebe oder Gelege von Endlosfasersträngen enthalten. Im Zentrum des Radsterns kann der Radstern mit einer eingefügten Radnabe fest verbunden sein. Die Ausbildung der Öffnung für die Aufnahme der Radnabe wird nicht näher beschrieben. Aus der Zeichnung ist ein ebener Randbereich der Öffnung ersichtlich, wobei die Radscheibe mit einer senkrecht zur Radachse weisenden Randfläche abschließt, die als Sitz für den zylindrischen Stumpf der Radnabe dient. Eine Anlagefläche der Radnabe weist darauf hin, dass die Verbindung mit der Radscheibe mittels eines Befestigungsmittels durch Verspannen gegen den ebenen Randbereich der Öffnung der Radscheibe erfolgt. Durch die dadurch erzeugten Vorspannkräfte werden die Fasern der Gewebe oder Gelege der Radscheibe miteinander verpresst, wodurch die Faserverbundstruktur in diesem Bereich erheblich geschwächt wird.

Aus der Druckschrift DE 689 22 982 T2 ist ein Fahrzeugrad aus faserverstärktem Verbundstoff bekannt, das eine Radfelge mit einer Radscheibe umfasst. Die Radscheibe hat zur Befestigung der Radscheibe an einer Radnabe eine zentrale Befestigungsöffnung zur Aufnahme der Radnabe und eine Mehrzahl von konzentrisch um die Radachse angeordneten Befestigungsöffnungen, die die mit Gewinde versehenden Verbindungselemente zur Befestigung der Radscheibe an der Radnabe aufnehmen. Die Verschraubung der Schraubbolzen erfolgt in axialer Richtung. Für den passgenauen Sitz der Verbindungselemente (Schraubbolzen) ist in jede Befestigungsöffnung in der Art einer angeschnittenen Fase eine konische Sitzoberfläche vorgesehen. Die Verstärkungsfasern der Radscheibe sind vorzugsweise in Ebenen senkrecht zur Radachse angeordnet und enden in den Befestigungsöffnungen, d.h. der Faserverlauf ist dort unterbrochen.

Nachteilig ist, dass durch die Gestaltung der Befestigungsöffnungen der Wandquerschnitt der Radscheibe verjüngt ist und damit die Faserverbundstruktur der Radscheibe gerade im hochbeanspruchten Bereich der Verbindung zur Radnabe des Fahrzeuges geschwächt ist.

Außerdem werden bei der Einleitung der Vorspannkräfte in die Radscheibe die Faserlagen miteinander verpresst, wodurch die Faserverbundstruktur ebenfalls geschwächt wird.

Eine Vorrichtung der gattungsgemäßen Art ist aus der Druckschrift DE 196 08 601 A1 bekannt. Darin ist eine Felge mit einer Radscheibe aus faserverstärktem Kunststoff beschrieben, bei der die Radscheibe über eine zentrale Öffnung verfügt und mittels eines Zentralverschlusses mit der Radnabe bzw. einem Befestigungskörper der Radnabe verbunden wird. Der Befestigungskörper ist mittels mehrerer Schraubbolzen mit der Radachse verbunden. Die zentrale Öffnung der Radscheibe hat eine konische Zentrierfläche in Richtung des Befestigungskörpers zur Zentrierung der Radscheibe am Befestigungskörper. Die zentrale Öffnung hat außerdem eine konische Zentrierfläche in Richtung der Zentralmutter, um den zentrischen Sitz der Zentralmutter und des zwischengelagerten Druckringes zu gewährleisten.

Zwar stellen die konischen Zentrierflächen eine vergrößerte Fläche zur Einleitung der Klemmkräfte zur Verfügung, allerdings führt die Gestaltung ebenfalls dazu, dass die Wandstärke der Radscheibe gerade im hochbeanspruchten Bereich geschmälert und damit die Festigkeit des Faserverbundmaterials geschwächt wird.

Außerdem erfordert diese Befestigungslösung einen hohen Fertigungs- und Montageaufwand.

Der Erfindung liegt die Aufgabe zugrunde, eine Radfelge zu schaffen, die die vorstehend genannten Nachteile des Standes der Technik überwindet, insbesondere besteht die Aufgabe darin, die Haltbarkeit der Radanbindung zu verbessern und zugleich deren Fertigungs- und Montageaufwand zu minimieren.

Die Aufgabe wird erfindungsgemäß damit gelöst, dass die Verstärkungsfasern des Faserverbundwerkstoffes in flächigen Faserlagen angeordnet sind und wenigstens ein Teil der Faserlagen in einem Randbereich der Öffnung der Radscheibe senkrecht zur Zentrierfläche der Radscheibe angeordnet ist.

Die Erfindung macht sich die Eigenschaften von endlosfaserverstärkten Faserverbundstrukturen zunutze, die in mehreren Ebenen oder Schichten angeordnete Faserlagen aufweisen. Die Faserlagen sind im Wesentlichen zweidimensionale, textile Gewebe oder Gelege aus Fasersträngen von Endlos-Fasern (Rovings). Die Faserstränge enthalten Verstärkungsfasern, wie z.B. Kohlenstofffasern, Glasfasern oder Aramidfasern. Erfindungsgemäß sind einige oder alle Faserlagen im Randbereich der Öffnung senkrecht zur Zentrierfläche angeordnet, somit liegen auch die Ebenen, in der die Verstärkungsfasern verlaufen, im Randbereich der Öffnung senkrecht zu dieser Zentrierfläche. Da die konische Zentrierfläche stets in einem vom rechten Winkel abweichenden Winkel zur Radachse geneigt ist, sind somit auch die Faserlagen bzw. die Ebenen der Verstärkungsfasern im Randbereich der Öffnung nicht senkrecht zur Radachse angeordnet. Die Verstärkungsfasern verlaufen im Randbereich der Öffnung unrechtwinklig zur Radachse und enden stumpf in der Zentrierfläche.

Der Randbereich der Öffnung ist der Bereich der Radscheibe, der durch den direkten und indirekten Eingriff der Befestigungsmittel besonders stark beansprucht wird.

Die Erfindung geht davon aus, dass die mechanische Belastbarkeit des endlosfaserverstärkten Faserverbundmaterials in Richtung einer gedachten Flächennormale der Faserlage und damit quer zur Faserrichtung der Verstärkungsfasern deutlich geringer ist, als senkrecht zu dieser Flächennormale. Die bei der Radmontage im Randbereich axial wirkende Vorspannkraft der Befestigungsmittel wird über die Zentrierfläche in die Radscheibe, und zwar planparallel in die Ebenen der verstärkenden Faserlagen und vorzugsweise in Faserrichtung der Verstärkungsfasern, eingeleitet.

Der Kraftflusspfad verläuft dabei vom Befestigungsmittel über die Zentrierfläche in Richtung der Verstärkungsfasern und direkt in die Verstärkungsfasern hinein. Somit wird eine fasergerechte Krafteinleitung in die Faserverbundstruktur ermöglicht, die eine Verpressung des Faserverbundmaterials in der eigentlichen Vorzugsrichtung der Belastbarkeit vorsieht. Im Ergebnis wird mit geringen konstruktiven Mitteln eine deutlich höhere Haltbarkeit der Radanbindung realisiert.

Die erfindungsgemäße Lösung ist sowohl bei einer Radanbindung mittels Zentralverschluss, als auch bei einer Radanbindung mittels klassischer Lochkreisverschraubung anwendbar.

Vorteilhafte Ausgestaltungen und Weiterbildungen der Erfindung gehen aus den abhängigen Patentansprüchen 2 bis 14, der nachfolgenden Beschreibung und den zugehörigen Zeichnungen hervor.

In einer bevorzugten Ausgestaltung erstreckt sich die konische Zentrierfläche vollständig über den Wandquerschnitt der Radscheibe. Somit kann die Krafteinleitung vom Befestigungsmittel über die gesamte Wandstärke und in sämtliche, an der Öffnung endenden Verstärkungsfasern erfolgen. Das bewirkt eine besonders günstige Kraftverteilung.

Vorzugsweise sind die Faserlagen des Faserverbundwerkstoffes im Wesentlichen parallel zur Scheibenkontur der Radscheibe angeordnet.

Damit kann die durch die Verspannung der Befestigungsmittel in die Faserlagen eingeleitete Kraft im stetigen Verlauf in den radial erstreckten Umfangsbereich der Radscheibe abgeleitet werden, womit Spannungsspitzen vermieden werden.

In einer vorteilhaften Ausführung weist wenigstens ein Befestigungsmittel eine Sitzfläche auf, die zur Zentrierfläche der Radscheibe kongruent ausgebildet ist. Dadurch, dass die an der Zentrierfläche anliegende Sitzfläche die Zentrierfläche vollständig überdeckt, können die Vorspannkräfte gleichmäßig auf die gesamte Zentrierfläche verteilt und damit die Beanspruchung der einzelnen Faserebenen der Faserverbundstruktur gemindert werden.

Weist der Randbereich der Öffnung ein metallisches Insert auf, wird die Radscheibe im hochbeanspruchten Bereich um die Öffnung zusätzlich verstärkt. Mechanische Beanspruchung und Verschleißerscheinungen an der Faserverbundstruktur der Radscheibe, wie sie beispielsweise durch eine wiederholte Radmontage und durch das Anziehen der Befestigungsmittel auftreten, können so gemindert werden.

Ebenso wird durch das Insert der Schwingreibverschleiß gemindert, der durch die Relativbewegungen beim Fahren entsteht.

Vorzugsweise ist das Insert derart angeordnet, dass es den Randbereich der Öffnung der Radscheibe umschließt. Somit sind die äußeren Flächen des Randbereiches der Öffnung und insbesondere auch die Zentrierfläche gegen Montagebeanspruchung und Verschleiß geschützt. Das Insert erleichtert zudem die Zentrierung der Radfelge auf der Radnabe. Die metallische Ummantelung durch das Insert bewirkt eine günstige Verteilung der Vorspannkraft auf den Randbereich und die Zentrierfläche.

Für die Fertigung der Radscheibe ist es besonders vorteilhaft, wenn das Insert zweiteilig ausgebildet ist. Durch die Teilung wird eine nachträgliche Montage des Inserts im Anschluss an den Konsolidierungsprozess der Radscheibe ermöglicht.

In einer bevorzugten Ausführung weist die Radscheibe fahrzeugseitig eine Anlagefläche zur Anlage an einer Stützfläche der Radnabe oder eines mit der Radnabe verbundenen Befestigungsmittels auf, wobei die Stützfläche formschlüssig korrespondierend zur Anlagefläche ausgebildet ist. Die Stützfläche der Radnabe oder des radnabenseitigen Befestigungsmittels stellt das Gegenkraftelement bei der Befestigung der Radscheibe an der Radnabe dar. Die Anlagefläche kann eine beliebige, vorzugsweise eine parallel zu den Faserlagen ausgebildete Kontur aufweisen. In diesem Fall ist die Kontur der Anlagefläche im Randbereich der Öffnung der Radscheibe gekrümmt oder zumindest in einem unrechten Winkel zur Radachse ausgebildet. Durch eine zur Anlagefläche formschlüssige Gestaltung der Stützfläche kann bei der Montage die Vorspannkraft radnabenseitig über eine größtmögliche Fläche in die Radscheibe eingeleitet werden, was die Beanspruchung der Faserverbundstruktur in diesem Bereich mindert.

Die fahrzeugseitige Einleitung der axialen Vorspannkraft über die Stützfläche bewirkt zwar eine gewisse Verpressung der Faserlagen des Faserverbundmaterials der Radscheibe quer zur Faserrichtung. Diese Verpressung erfolgt jedoch aufgrund der passgerechten Größe und Form der Stützfläche mit einer besonders großen Lastverteilung bei geringer Flächenlast.

Besonders günstig ist die fahrzeugseitige Anlagefläche im Randbereich der Öffnung der Radscheibe angeordnet, wo die korrespondierende Stützfläche gerade die Faserlagen in ihrer Umlenkung von der eigentlichen radialen Ausrichtung in die zur Radachse abgewinkelte Ausrichtung stützt.

In einer weiteren Ausführungsform der Erfindung weisen die Radscheibe außenseitig eine Anlagefläche und ein Befestigungsmittel eine mit der außenseitigen Anlagefläche formschlüssig korrespondierende Stützfläche auf. Damit wird die Radscheibe von einem Befestigungsmittel zusätzlich seitlich umfasst. Hierdurch wird in diesem Bereich ein isostatischer Spannungszustand erzeugt, der ein Ausweichen der Faserverbundstruktur der Radscheibe verhindert und damit die örtliche Festigkeit der Radscheibe erhöht.

Vorzugsweise ist die außenseitige Anlagefläche im Randbereich der Öffnung angeordnet, wo die zusätzliche Führung durch die korrespondierende Stützfläche des Befestigungsmittels besonders den hochbelasteten Bereich der Radanbindung der Radscheibe festigt.

Vorteilhafter Weise ist das im Randbereich der Öffnung vorgesehene Insert über die Anlagefläche(n) erstreckt angeordnet. Das Insert kann über eine Anlagefläche oder mehrere Anlageflächen der Radscheibe erstreckt angeordnet sein, nämlich über die fahrzeugseitige Anlagefläche oder über die außenseitige Anlagefläche oder über beide genannten Anlageflächen. So können Verschleißerscheinungen beim Flächenkontakt der Radscheibe mit der Stützfläche der Radnabe oder des radnabenseitigen Befestigungsmittels bzw. mit der Stützfläche eines gegenwirkenden, äußeren Befestigungsmittels wirksam gemindert werden und die Krafteinleitung in die Radscheibe verbessert werden.

In einer besonders vorteilhaften Ausgestaltung ist an der Öffnung ein zweiter Randbereich mit einer zweiten konischen Zentrierfläche ausgebildet, wobei ein Teil der Faserlagen des Faserverbundwerkstoffes der Radscheibe im zweiten Randbereich der Öffnung und senkrecht zur zweiten Zentrierfläche angeordnet ist. Die Faserlagen werden auf die beiden Randbereiche der Öffnung aufgeteilt und enden senkrecht zu den jeweiligen Zentrierflächen. Hierdurch kann die fasergerechte Einleitung der Vorspannkraft der Radverschraubung lastverteilend in alle Faserlagen erfolgen. Die zweite Zentrierfläche des abgespreizten Randbereiches kann an einer konischen Sitzfläche der Radnabe oder an einer konischen Sitzfläche eines gegenkraftbewirkenden Befestigungsmittels angelegt werden, wodurch eine Verpressung der Faserlagen der Radscheibe quer zur Faserrichtung gänzlich vermieden werden kann. Da an der Zentrierfläche infolge der besseren Belastbarkeit der Faserlagen eine höhere Flächenpressung möglich ist, kann die konische Sitzfläche erheblich kleiner gestaltet sein, als die Stützfläche, die zur Pressung an der äußeren Anlagefläche der Radscheibe benötigt wird.

Außerdem werden bei dieser Anschlussform der Radscheibe Steifigkeitssprünge in der Radscheibe vermieden, die bei der Verpressung des Befestigungsmittels an einer zur Radscheibe parallelen Anlagefläche, insbesondere im Übergang von der Anlagefläche zum äußeren Umfangsbereich der Radscheibe, auftreten können.

Ist in einem Zwickelraum, der zwischen den Randbereichen gebildet ist, ein Stützelement angeordnet, wird die Radscheibe an dieser Stelle besonders verstärkt. Das Stützelement stabilisiert den hochbeanspruchten Bereich der Radscheibe gegen die an der Radanbindung vorherrschenden statischen und dynamischen Belastungen. Vorzugsweise ist das Stützelement ein, den Zwickelraum vollständig ausfüllender, umlaufend profilierter Ringkörper aus einem festem Material. Damit wird in diesem Bereich ein isostatischer Spannungszustand erzeugt, wodurch sehr hohe Lasten übertragen werden können.

In einer besonders vorteilhaften Ausgestaltung der Erfindung ist ein Befestigungsmittel als eine Adapterscheibe ausgebildet, welche eine Sitzfläche für den Sitz an der Zentrierfläche der zentrischen Öffnung der Radscheibe und mehrere konzentrisch angeordnete Öffnungen zur Aufnahme von Befestigungsbolzen aufweist. Diese Ausführungsform ermöglicht, eine erfindungsgemäße Radscheibe, welche mit einer zentrischen Öffnung ausgestattet ist, mittels Lochkreisverschraubung an einer Radnabe mit einem Lochkreis zu befestigen.

Ist die Adapterscheibe derart ausgebildet, dass sie an einem Zentrierbund der Radnabe oder eines mit der Radnabe verbundenen Befestigungsmittels anordenbar ist, erleichtert dies die passgerechte Anordnung und Montage der Radfelge mit den Befestigungsmitteln an der Radnabe.

Die erfindungsgemäße Vorrichtung wird anhand mehrerer Ausführungsbeispiele näher erläutert. Es zeigen in schematischer Darstellung:
- Fig. 1: eine fragmentarische Schnittansicht einer mittels Zentralverschluss an einer Radnabe befestigten Radfelge
- Fig. 2: eine Detailschnittansicht der befestigten Radfelge nach Fig. 1 mit einem Insert,
- Fig. 3: eine Detailschnittansicht der befestigten Radfelge nach Fig. 1 mit einer alternativen Spannscheibe,
- Fig. 4: eine Detailschnittansicht einer mittels Zentralverschluss an einer Radnabe befestigten Radfelge nach einem zweiten Ausführungsbeispiel,
- Fig. 5: eine Detailschnittansicht einer mittels Lochkreisverschluss an einer Radnabe befestigten Radfelge nach einem dritten Ausführungsbeispiel.

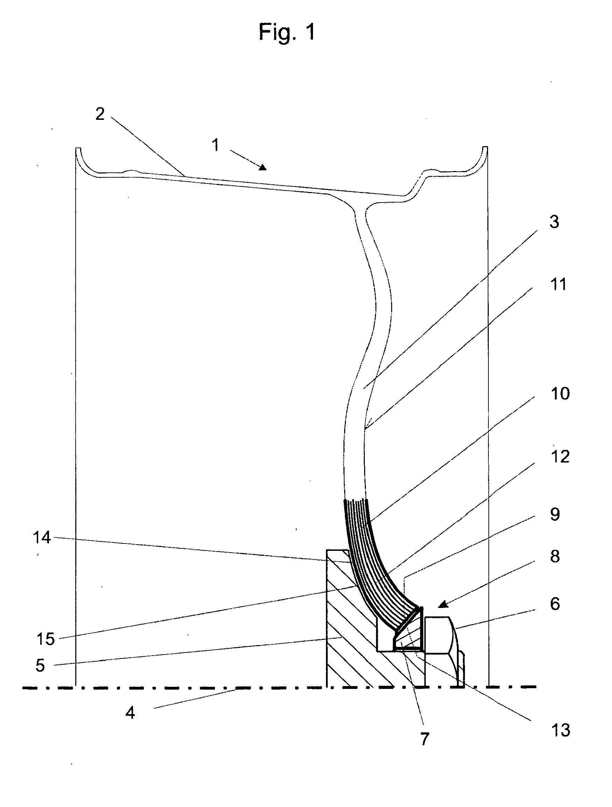

In Fig. 1 ist eine erfindungsgemäße Radfelge 1 mit einem Felgenbett 2 und einer Radscheibe 3 aus kohlenstofffaserverstärktem Kunststoff in einem bis zu einer Radachse 4 reichenden Teilschnitt dargestellt. Der Einfachheit halber wird auf die Gesamtschnittdarstellung der Radfelge 1 verzichtet. Die Radfelge 1 befindet sich im montierten Zustand im Eingriff mit einer schematisch dargestellten Radnabe 5 eines Kraftfahrzeuges. Die Radnabenanbindung der Radfelge 1 ist als eine Zentralverschraubung ausgeführt, die sich einer Radmutter 6 mit Schraubgewinde und einer ringförmigen Spannscheibe 7 als Befestigungsmittel bedient.

Die Radscheibe 3 weist eine zentrische Öffnung 8 auf, in der im Montagezustand die Radnabe 5 sitzt. Die zentrische Öffnung 8 hat eine konische Zentrierfläche 9, die geneigt zur Radachse 4 steht und über den gesamten Wandquerschnitt der Radscheibe 3 reicht.

Der für die Radfelge 1 verwendete kohlenstofffaserverstärkte Kunststoff enthält flächig verarbeitete Faserlagen 10, in die Endlos- Verstärkungsfasern eingearbeitet sind. Die Faserlagen sind in radialer Erstreckung der Radscheibe 3 und parallel zur Scheibenkontur 11 der Radscheibe 3 angeordnet, so wie es aus den dargestellten Verlaufslinien der Faserlagen 10 im Wandquerschnitt der Radscheibe 3 ersichtlich ist. Die Verlaufslinien deuten schematisch die Schnittkanten der einzelnen Faserlagen 10 an. Die Faserlagen 10 sind an der zentrischen Öffnung 8 durchbrochen. In einem Randbereich 12 um die zentrische Öffnung 8 ist die Scheibenkontur 11 deutlich gekrümmt ausgebildet. Die Faserlagen 10 mit den Verstärkungsfasern folgen der Umlenkung der Scheibenkontur 11 von einer weitestgehend radialen Ausrichtung im Außenbereich der Radscheibe 3 in einer zur Radachse geneigten Ausrichtung im Randbereich 12 der zentrischen Öffnung 8. An der Zentrierfläche 9 der Radscheibe 3 münden die Faserlagen 10 in einer senkrechten Anordnung zu dieser. Sämtliche Enden der Verstärkungsfasern der Faserlagen 10, welche in der Öffnung 8 durchbrochen sind, liegen in parallelen, zur Zentrierfläche 9 rechtwinkligen Ebenen.

An dieser Zentrierfläche 9 liegt im montierten Zustand die ringförmige Spannscheibe 7 mit ihrer korrespondierenden konischen Sitzfläche 13 bündig an. Die durch die Radmutter 6 und die Spannscheibe 7 in Richtung der Radachse 4 aufgebrachte Vorspannkraft wird über die Zentrierfläche 9 in Faserrichtung und damit in die bevorzugte Richtung höchster mechanischer Belastbarkeit der Faserlagen 10 in die Radscheibe 3 eingebracht.

Die Sitzfläche 13 der Spannscheibe 7 deckt die Zentrierfläche 9 und überragt sie geringfügig. Damit wird auch bei auftretenden Maßtoleranzen gewährleistet, dass die Sitzfläche 13 die Zentrierfläche 9 der Radscheibe 3 immer vollständig überdeckt und die Vorspannkraft gleichmäßig über die gesamte Zentrierfläche 9 und in jede der Faserlagen 10 eingeleitet wird.

Im Bereich der gekrümmten Scheibenkontur 11 weist die Radscheibe 3 innenseitig eine umlaufend konvex geformte Oberfläche auf, die bei der Montage der Radfelge 1 und Verspannung der Radscheibe 3 als fahrzeugseitige Anlagefläche 14 zur Anlage an eine korrespondierende, umlaufend konkav geformte Stützfläche 15 der Radnabe 5 dient. Damit werden kurze Kraftflusswege der axial eingeleiteten Vorspannkraft realisiert.

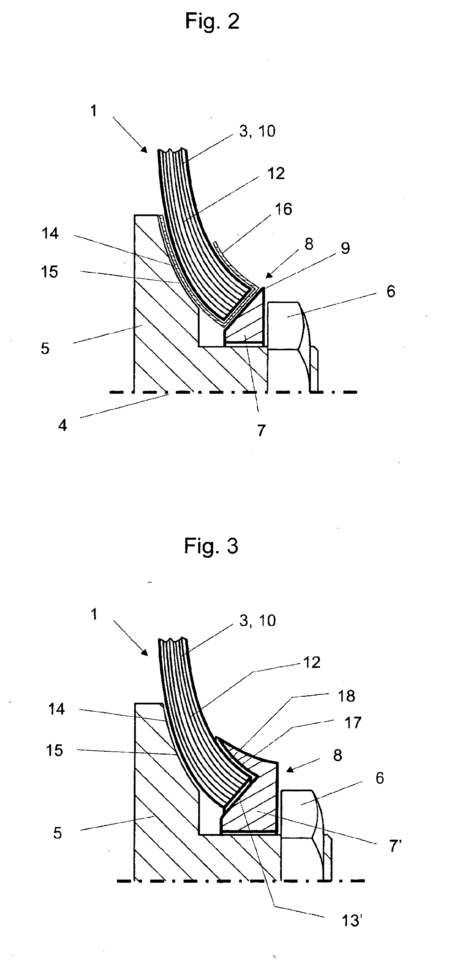

Fig. 2 zeigt die an derselben Radnabe 5 befestigte Radfelge 1 nach Fig. 1 in einer vergrößerten Detailansicht. Im Unterschied zur Radfelge 1 nach Fig. 1 ist die zentrische Öffnung 8 der Radscheibe 3 mit einem metallischen Insert 16 versehen. Das Insert 16 bildet eine umlaufende Einfassung der Öffnung 8 und erstreckt sich auf der Außenseite der Radscheibe 3, auf der Zentrierfläche 9 und auf der Innenseite der Radscheibe 3, wo es die fahrzeugseitige Anlagefläche 14 überdeckt. Das Insert 16 schützt die Öffnung 8 vor mechanischer Beanspruchung bei wiederholter Montage und Demontage, verteilt die einzuleitende Vorspannkraft und mindert den Reibverschleiß zwischen der Spannscheibe 7 und der Radscheibe 3 sowie zwischen der Radnabe 5 und der Radscheibe 3.

In Fig. 3 ist die an der Radnabe 5 befestigte Radfelge 1 nach Fig. 1 in einer weiteren Detailansicht dargestellt. Im Unterschied zur Radfelge 1 nach Fig. 1 ist die Radscheibe mit einer alternativen Spannscheibe 7' an der Radnabe 5 befestigt. Die Spannscheibe 7' weist neben der Sitzfläche 13' einen Flansch mit einer umlaufend konvex geformten Stützfläche 17 auf. Diese ist so ausgebildet, dass sie bei der Montage mit einer außenseitigen Anlagefläche 18 der Radscheibe 3 korrespondiert, die sich auf der umlaufend, konkav geformten äußeren Oberfläche des Randbereiches 12 der Öffnung 8 erstreckt. Die Stützfläche 17 kann sich in einer nicht dargestellten alternativen Gestaltung des Flansches auch vollständig über die äußere Oberfläche des Randbereiches 12 erstrecken. Bei der Befestigung der Radscheibe 3 an der Radnabe 5 mittels der Spannscheibe 7' wird durch die Stützfläche 15 der Radnabe 5, die Sitzfläche 13' und Stützfläche 17 der Spannscheibe 7 eine dreiseitig Führung des Randbereiches 12 der Radscheibe 3 ausgebildet, so dass ein Ausweichen der Struktur der Radscheibe 3 verhindert wird. Damit wird ein isostatischer Spannungszustand zur Erhöhung der Festigkeit der Radscheibe 3 in der Anbindezone erreicht.

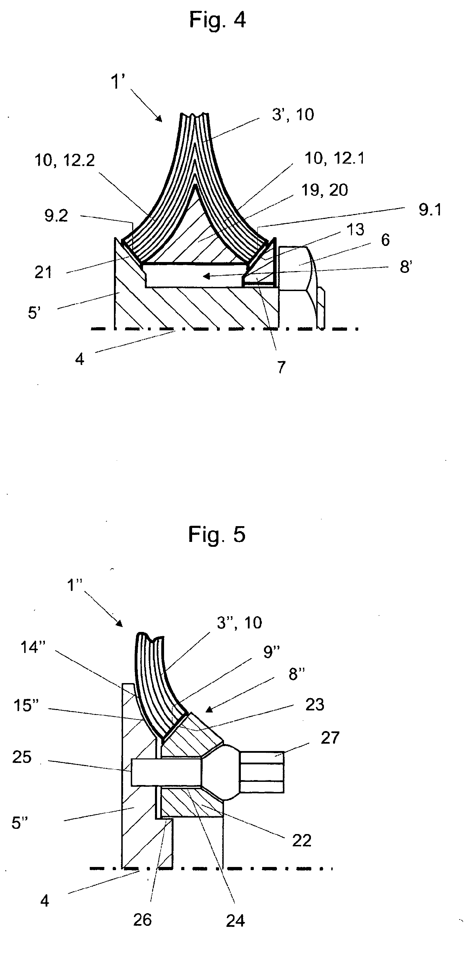

In Fig. 4 ist ein Ausschnitt einer erfindungsgemäßen Radfelge 1' und ihrer Befestigung an einer Radnabe 5' mittels Zentralverschluss nach einem zweiten Ausführungsbeispiel dargestellt. Nachfolgend werden lediglich die Unterschiede gegenüber dem Ausführungsbeispiel nach Fig. 1 beschrieben. Die Unterschiedsmerkmale sind in der Detaildarstellung nach Fig. 4 ersichtlich, weshalb auf eine vollständige Schnittdarstellung der Radfelge 1' verzichtet wurde. Hinsichtlich der sich wiederholenden, übereinstimmenden Merkmale und Bauteile wird auf die Beschreibung zum Ausführungsbeispiel nach Fig. 1 verwiesen.

Die Radscheibe 3' nach Fig. 4 weist an ihrer zentrischen Öffnung 8' einen zweiten Randbereich 12.2 mit einer zweiten konischen Zentrierfläche 9.2 auf. Die Radscheibe 3' ist um die Öffnung 8' herum in zwei Randbereiche 12.1, 12.2 gespreizt. Die beiden Zentrierflächen 9.1, 9.2 der Radscheibe 3' sind sich gegenüberliegend und zueinander gespiegelt angeordnet. Die Faserlagen 10 der Radscheibe teilen sich in den Randbereichen 12.1, und 12.2 auf und enden wiederum senkrecht zur jeweiligen Zentrierfläche 9.1, 9.2.

In einer nicht dargestellten Ausführungsvariante werden die beiden Randbereiche 12.1, 12.2 durch Aufteilung der Gesamtzahl der Faserlagen 10 erzeugt, wobei sich der Gesamt-Wandquerschnitt der Radscheibe 3' anteilig auf die Wandquerschnitte der Randbereiche 12.1, 12.2 aufteilt. Die Anzahl der Faserlagen 10 bleibt im Übergang von Randbereich 12.1, 12.2 zum äußeren Umfang der Radscheibe 3' gleich.

In der in Fig. 4 dargestellten Gestaltung ist die Ausführung dahingehend variiert, dass in den Randbereichen 12.1, 12.2 zusätzliche Faserlagen 10 vorgesehen sind, die sich vom Ansatz der Randbereiche 12.1, 12.2 bis zu den Zentrierflächen 9.1, 9.2 erstrecken. Die zusätzlichen Faserlagen 10 erweitern die Wandquerschnitte der Randbereiche 12.1, 12.2 und vergrößern die Zentrierflächen 9.1, 9.2. Das bewirkt eine weitere Lastverteilung in den Zentrierflächen 9.1, 9.2 und eine gezielt höhere Festigkeit der Radscheibe 3 in den Randbereichen 12.1, 12.2.

Zwischen den Randbereichen 12.1, 12.2 ist ein Zwickelraum 19 gebildet, in dem ein metallischer, keilförmig profilierter Stützring 20 formschlüssig eingepasst ist. Dieser Stützring 20 erhöht die Stabilität der Radscheibe 3 im hochbeanspruchten Bereich des Zentralverschlusses der Radfelge 1' mit der Radnabe 5'.

Korrespondierend zur zweiten Zentrierfläche 9.2 weist die Radnabe 5' eine umlaufend konisch ausgebildete Sitzfläche 21 auf. Bei der Herstellung der Radverschraubung wird an die erste Zentrierfläche 9.1 die Sitzfläche 13 der Spannscheibe 7 angepresst, während sich die zweite Zentrierfläche 9.2 an die gegenwirkende konische Sitzfläche 21 der Radnabe 5' anlegt. Dadurch kann die axiale Anzugskraft der Radmutter 6 gleichmäßig und in Vorzugsrichtung der Belastbarkeit auf alle Faserlagen 10 übertragen werden.

Fig. 5 zeigt einen Ausschnitt einer erfindungsgemäße Radfelge 1" und ihre Radnabenbefestigung nach einem dritten Ausführungsbeispiel. Die Anbindung der Radfelge 1" erfolgt hier durch eine Verschraubung an eine Radnabe 5" mit Lochkreis. Die nachfolgende Beschreibung beschränkt sich auf die Erläuterung der Unterschiede gegenüber dem Ausführungsbeispiel nach Fig. 1, die in der Detailansicht nach Fig. 5 ersichtlich sind. Hinsichtlich der sich wiederholenden, übereinstimmenden Merkmale und Bauteile wird auf die Beschreibung zum Ausführungsbeispiel nach Fig. 1 verwiesen.

Die Radfelge 1" nach Fig. 5 weist analog der Radfelge 1 nach Fig. 1 eine Radscheibe 3" aus kohlenstofffaserverstärktem Kunststoff mit einer zentrischen Öffnung 8" für die Aufnahme der schematisch dargestellten Radnabe 5" auf. Als Befestigungsmittel ist anstelle der ringförmigen Spannscheibe 7 eine Adapterscheibe 22 vorgesehen. An der Adapterscheibe 22 ist eine konische Sitzfläche 23 für den passgenauen Sitz an der konischen Zentrierfläche 9" der zentrischen Öffnung 8" ausgebildet. Auf die Zentrierfläche 9" laufen die Faserlagen 10 der Radscheibe 3" senkrecht auf. Über dem Umfang der Adapterscheibe 22 ist ein Lochkreis mit mehreren, beispielsweise 4 Durchbrüchen 24 in einer konzentrischen Anordnung ausgebildet. Einen ebensolchen Lochkreis mit gleicher Anzahl und Anordnung von Gewindebohrungen 25 weist die Radnabe 5" auf. Die Radnabe 5" verfügt außerdem über einen Zentrierbund 26 zum genauen Anlegen der Adapterscheibe 22.

Zur Montage der Radfelge 1" an der Radnabe 5" wird die Radscheibe 3" mittels der Adapterscheibe 22 am Zentrierbund 26 ausgerichtet. Mit üblichen Radbolzen 27, die durch die Durchgänge 24 der Adapterscheibe 22 in die Gewindebohrungen 25 geführt werden, wird die Radfelge 1" an der Radnabe 5" verschraubt bis die Anlagefläche 14" der Radscheibe 3" an der konkaven Stützfläche 15" der Radnabe 5" anliegt. Die axiale Vorspannkraft der Radbolzen 27 wird auch hier auf kurzem Kraftflussweg und hauptsächlich in Faserrichtung in die Faserlagen 10 eingeleitet.

Mit Hilfe der Adapterscheibe 22 kann eine erfindungsgemäße Radfelge 1, 1', 1" mit zentrischer Öffnung 8, 8', 8" wahlweise auch an eine Radnabe 5" mit Lochkreisverschraubung montiert werden.

### Bezugszeichenliste

- 1: Radfelge
- 2: Felgenbett
- 3: Radscheibe
- 4: Radachse
- 5: Radnabe
- 6: Befestigungsmittel, Radmutter
- 7: Befestigungsmittel, Spannscheibe
- 8: zentrische Öffnung der Radscheibe
- 9: konische Zentrierfläche, erste 9.1, zweite 9.2
- 10: Faserlage
- 11: Scheibenkontur
- 12: Randbereich der Öffnung, erster 12.1, zweiter 12.2
- 13: Sitzfläche der Spannscheibe
- 14: fahrzeugseitige Anlagefläche der Radscheibe
- 15: konkave Stützfläche der Radnabe
- 16: Insert
- 17: konvexe Stützfläche der Spannscheibe
- 18: außenseitige Anlagefläche der Radscheibe
- 19: Zwickelraum
- 20: Stützelement, Stützring
- 21: konische Sitzfläche der Radnabe
- 22: Befestigungsmittel, Adapterscheibe
- 23: Sitzfläche der Adapterscheibe
- 24: Öffnung, Durchgang der Adapterscheibe
- 25: Gewindebohrung der Radfelge
- 26: Zentrierbund
- 27: Befestigungsbolzen, Radbolzen

## Patentansprüche

1. Radfelge mit einer Radscheibe (3) aus einem Faserverbundwerkstoff und mit Befestigungsmitteln (6, 7, 22, 27) zur Befestigung der Radscheibe (3) an einer Radnabe (5) eines Fahrzeugs, wobei die Radscheibe (3) eine Öffnung (8) zur Aufnahme der Radnabe (5) aufweist und die Öffnung (8) mit einer konischen Zentrierfläche (9) für den korrespondierenden Sitz des Befestigungsmittels (6, 7, 22, 27) ausgebildet ist, **dadurch gekennzeichnet, dass** die Verstärkungsfasern des Faserverbundwerkstoffes in flächigen Faserlagen (10) angeordnet sind und wenigstens ein Teil der Faserlagen (10) in einem Randbereich (12) der Öffnung (8) senkrecht zur Zentrierfläche (9) der Radscheibe (3) angeordnet ist.

2. Radfelge nach Anspruch 1, **dadurch gekennzeichnet, dass** die konische Zentrierfläche (9) vollständig über den Wandquerschnitt der Radscheibe (3) erstreckt ausgebildet ist.

3. Radfelge nach Anspruch 1 oder 2, **dadurch gekennzeichnet, dass** die Faserlagen (10) des Faserverbundwerkstoffes im Wesentlichen parallel zur Scheibenkontur (11) der Radscheibe (3) angeordnet sind.

4. Radfelge nach einem der Ansprüche 1 bis 3, **dadurch gekennzeichnet, dass** wenigstens ein Befestigungsmittel (7, 22) eine Sitzfläche (13, 23) aufweist, die zur Zentrierfläche (9) der Radscheibe (3) kongruent ausgebildet ist.

5. Radfelge nach einem der vorstehenden Ansprüche, **dadurch gekennzeichnet, dass** der Randbereich (12) der Öffnung (8) ein metallisches Insert (16) aufweist.

6. Radfelge nach Anspruch 5, **dadurch gekennzeichnet, dass** das Insert (16) den Randbereich (12) der Öffnung (8) umschließend angeordnet ist.

7. Radfelge nach Anspruch 5 oder 6, **dadurch gekennzeichnet, dass** das Insert (16) zweiteilig ausgebildet ist.

8. Radfelge nach einem der vorstehenden Ansprüche, **dadurch gekennzeichnet, dass** die Radscheibe (3) fahrzeugseitig eine Anlagefläche (14) zur Anlage an einer Stützfläche (15) der Radnabe (5) oder eines mit der Radnabe (5) verbundenen Befestigungsmittels aufweist, wobei die Stützfläche (15) formschlüssig korrespondierend zur Anlagefläche (14) ausgebildet ist.

9. Radfelge nach einem der vorstehenden Ansprüche, **dadurch gekennzeichnet, dass** die Radscheibe (3) außenseitig eine Anlagefläche (18) und ein Befestigungsmittel (7) eine mit der außenseitigen Anlagefläche (18) formschlüssig korrespondierende Stützfläche (17) aufweist.

10. Radfelge nach einem der Ansprüche 5 bis 9, **dadurch gekennzeichnet, dass** das Insert (16) über die Anlagefläche(n) (14, 18) erstreckt angeordnet ist.

11. Radfelge nach einem der vorstehenden Ansprüche, **dadurch gekennzeichnet, dass** an der Öffnung (8) ein zweiter Randbereich (12.2) mit einer zweiten konischen Zentrierfläche (9.2) ausgebildet ist, wobei ein Teil der Faserlagen (10) des Faserverbundwerkstoffes der Radscheibe (3) im zweiten Randbereich (12.2) und senkrecht zur zweiten Zentrierfläche (9.2) angeordnet ist.

12. Radfelge nach Anspruch 11, **dadurch gekennzeichnet, dass** die zweite konische Zentrierfläche (9.2) für den korrespondierenden Sitz der Radnabe (5) ausgebildet ist.

13. Radfelge nach Anspruch 12, **dadurch gekennzeichnet, dass** in einem Zwickelraum (19), der zwischen den Randbereichen (12.1, 12.2) gebildet ist, ein Stützelement (20) angeordnet ist.

14. Radfelge nach einem der vorstehenden Ansprüche, **dadurch gekennzeichnet, dass** ein Befestigungsmittel (22) als eine Adapterscheibe ausgebildet ist, welche eine Sitzfläche (23) für den Sitz an der Zentrierfläche (9) der zentrischen Öffnung (8) der Radscheibe (3) und mehrere konzentrisch angeordnete Öffnungen (24) zur Aufnahme von Befestigungsbolzen (27) aufweist.

15. Radfelge nach Anspruch 14, **dadurch gekennzeichnet, dass** die Adapterscheibe derart ausgebildet ist, dass sie an einem Zentrierbund (26) der Radnabe (5) oder eines mit der Radnabe (5) verbundenen Befestigungsmittels anordenbar ist.

## Claims

1. Wheel rim with a wheel disc (3) made of fibre composite material, and with fasteners (6, 7, 22, 27) to fasten the wheel disc (3) at a wheel hub (5) of a vehicle, with the wheel disc (3) having an opening (8) to accommodate the wheel hub (5) and the opening (8) is formed with a conical centring surface (9) for the corresponding seat of the fastener (6, 7, 22, 27), **characterised in that** the reinforcing fibres of the fibre composite material are arranged in sheet-like fibre layers (10) and at least one part of the fibre layers (10) is arranged in a border area (12) of the opening (8) perpendicular to the centring surface (9) of the wheel disc (3).

2. Wheel rim according to claim 1, **characterised in that** the conical centring surface (9) is formed completely stretched through the wall cross-section of the wheel disc (3).

3. Wheel rim according to claim 1 or 2, **characterised in that** the fibre layers (10) of fibre composite material are basically arranged parallel to the wheel contour (11) of the wheel disc (3).

4. Wheel rim according to claims 1 to 3, **characterised in that** at least one fastener (7, 22) has a seat bottom (13, 23) which is formed congruently to the centring surface (9) of the wheel disc (3).

5. Wheel rim according to one of the preceding claims, **characterised in that** the border area (12) of the opening (8) features a metallic insert (16).

6. Wheel rim according to claim 5, **characterised in that** the insert (16) is arranged surrounding the border area (12) of the opening (8).

7. Wheel rim according to claim 5 or 6, **characterised in that** the insert (16) is formed in two parts

8. Wheel rim according to one of the preceding claims, **characterised in that** the wheel disc (3) on the vehicle side has a bearing surface (14) to bear the wheel hub (5) or one of the fasteners connected with the wheel hub (5) on a support surface (15), with the support surface (15) being interlocking formed corresponding to the bearing surface (14).

9. Wheel rim according to one of the preceding claims, **characterised in that** the wheel disc (3) has on the outside a bearing surface (18) and a fastener (7) a support surface (17) interlocking corresponding with the outside bearing surface (18).

10. Wheel rim according to any of claims 5 to 9, **characterised in that** the insert (16) is arranged stretched beyond the bearing surface(s) (14, 18).

11. Wheel rim according to one of the preceding claims, **characterised in that** a second border area (12.2) with a second conical centring surface (9.2) is formed at the opening (8), where a part of the fibre layers (10) of the wheel disc fibre composite material (3) is arranged on the second border area (12.2) and perpendicularly to the second centring surface (9.2).

12. Wheel rim according to claim 11, **characterised in that** the second conical centring surface (9.2) is formed for the corresponding seat of the wheel hub (5).

13. Wheel rim according to claim 12, **characterised in that** a support element (20) is arranged in an interspace (19) formed between the border areas (12.1, 12.2).

14. Wheel rim according to one of the preceding claims, **characterised in that** a fastener (22) is formed as an adapter disc, which has a seat bottom (23) for the seat on the centring surface (9) of the central opening (8) at the wheel disc (3) and several concentrically arranged openings (24) to bear fastening bolts (27).

15. Wheel rim according to claim 14, **characterised in that** the adapter disc is formed in such a way that it can be arranged on a centring collar (26) of the wheel hub (5) or of a fastener connected with the wheel hub (5).

## Revendications

1. Jante avec disque de roue (3) composée d'un matériau composite renforcé de fibres avec des éléments de fixation (6, 7, 22, 27) pour le rattachement du disque de roue (3) au moyeu de roue (5) d'un véhicule, le disque de roue (3) présentant une ouverture (8) pour accueillir le moyeu de roue (5) et l'ouverture (8) étant formée avec une surface de centrage conique (9) pour le siège correspondant de l'élément de fixation (6, 7, 22, 27), **caractérisé en ce que** les fibres de renforcement du matériau composite sont disposées en couches de fibres étalées (10) et qu'au moins une partie des couches de fibres (10) sont disposées sur un rebord (12) de l'ouverture (8) verticalement à la surface de centrage (9) du disque de roue (3).

2. Jante selon la revendication 1, **caractérisée en ce que** la surface de centrage (9) s'étend de façon à recouvrir l'ensemble de la section de paroi du disque de roue (3).

3. Jante selon les revendications 1 ou 2, **caractérisée en ce que** les couches de fibres (10) du matériau composite sont essentiellement disposées parallèlement au contour (11) du disque de roue (3).

4. Jante selon l'une des revendications 1 à 3, **caractérisée en ce qu'**au moins un élément de fixation (7, 22) présente une surface de siège (13, 23) formée congrûment à la surface de centrage (9) du disque de roue (3).

5. Jante selon l'une des revendications précédentes, **caractérisée en ce que** le rebord (12) de l'ouverture (8) présente un insert métallique (16).

6. Jante selon l'une des revendications 5, **caractérisée en ce que** l'insert (16) est disposé de façon à cerner le rebord (12) de l'ouverture (8).

7. Jante selon l'une des revendications 5 ou 6, **caractérisée en ce que** l'insert (16) est formé de deux parties.

8. Jante selon l'une des revendications précédentes, **caractérisée en ce que** le disque de roue (3) présente du côté du véhicule une surface d'appui (14) pour s'appuyer contre une surface de support (15) du moyeu de roue (5) ou d'un élément de fixation relié au moyeu de roue (5), la surface de support (15) étant formée de façon à s'emboîter avec la surface d'appui (14).

9. Jante selon l'une des revendications précédentes, **caractérisée en ce que** le disque de roue (3) présente du côté externe une surface d'appui (18) et qu'un élément de fixation (7) présente une surface de support (17) s'emboîtant dans la surface d'appui (18) du côté externe.

10. Jante selon l'une des revendications 5 à 9, **caractérisée en ce que** l'insert (16) s'étend par-dessus la/les surface(s) de support (14, 18).

11. Jante selon l'une des revendications précédentes, **caractérisée en ce que** l'ouverture (8) est pourvue d'un deuxième rebord (12.2) doté d'une deuxième surface de centrage conique (9.2), une partie des couches de fibres (10) du matériau composite du disque de roue (3) étant disposée dans le deuxième rebord (12.2) et verticalement à la deuxième surface de centrage (9.2).

12. Jante selon la revendication 11, **caractérisée en ce que** la deuxième surface de centrage conique (9.2) est formée pour le siège correspondant du moyeu de roue (5).

13. Jante selon la revendication 12, caractérisée en ce qu'un élément de support (20) est disposé dans un interstice (19) formé entre les rebords (12.1, 12.2).

14. Jante selon l'une des revendications précédentes, caractérisée en ce qu'un élément de fixation (22) est formé comme un disque d'adaptateur qui présente une surface de siège (23) pour l'appui à la surface de centrage (9) de l'ouverture du centre (8) du disque de roue (3) ainsi que plusieurs ouvertures (24) disposées de façon concentrique servant à accueillir les boulons de fixation (27).

15. Jante selon la revendication 12, **caractérisée en ce que** le disque adaptateur est formé de façon à ce qu'il puisse être disposé contre un collier de centrage (26) du moyeu de roue (5) ou de l'élément de fixation relié au moyeu de roue (5).
